# EUROPÄISCHE PATENTSCHRIFT

(11) **EP 3 299 598 B1**
(45) Veröffentlichungstag und Bekanntmachung des Hinweises auf die Patenterteilung: **08.01.2020**
(21) Anmeldenummer: 17191121.7
(22) Anmeldetag: 14.09.2017
(51) Int. Cl.: F01N 3/20, F01N 3/28

(54) **REAKTIONSMITTELEINGABEANORDNUNG ZUR EINGABE VON REAKTIONSMITTEL IN DEN ABGASSTROM EINER BRENNKRAFTMASCHINE**
REACTANT INPUT ASSEMBLY FOR DISPENSING REACTANT INTO THE WASTE GAS FLOW OF A COMBUSTION ENGINE
DISPOSITIF D'INTRODUCTION DE RÉACTIF PERMETTANT L'INTRODUCTION DE RÉACTIF DANS LE FLUX DE GAZ D'ÉCHAPPEMENT D'UN MOTEUR À COMBUSTION INTERNE

(30) Priorität: 21.09.2016 DE 102016117746
(43) Veröffentlichungstag der Anmeldung: 28.03.2018
(73) Patentinhaber: Eberspächer Exhaust Technology GmbH & Co. KG, 66539 Neunkirchen (DE)
(72) Erfinder: Kurpejovic, Enver, 73230 Kirchheim unter Teck (DE); Semenov, Oleksandr, 73207 Plochingen (DE); Glaser, Steffen, 70188 Stuttgart (DE)
(74) Vertreter: Ruttensperger Lachnit Trossin Gomoll

(56) Entgegenhaltungen:
- CN-A- 104 879 198
- DE-A1-102013 104 579
- DE-A1-102013 210 955
- DE-A1-102014 108 877

## Beschreibung

Die vorliegende Erfindung betrifft eine Reaktionsmitteleingabeanordnung zur Eingabe von Reaktionsmittel in den Abgasstrom einer Brennkraftmaschine gemäß dem Oberbegriff des Anspruchs 1.

Um bei den in Kraftfahrzeugen eingesetzten Brennkraftmaschinen, insbesondere Diesel-Brennkraftmaschinen, den Stickoxidanteil im Abgas zu mindern, ist es bekannt, eine Katalysatoranordnung zur Durchführung einer selektiven katalytischen Reduktion (SCR) vorzusehen. Da zur Durchführung dieser Reaktion Ammoniak erforderlich ist, wird dem in einer Abgasanlage einer Brennkraftmaschine strömenden Abgas vermittels sogenannter Injektoren beispielsweise eine Harnstoff/Wasser-Lösung als Reaktionsmittel beigemischt. Für eine effiziente katalytische Reaktion ist eine gleichmäßige Durchmischung des Abgases mit in dieses eingespritztem Reaktionsmittel erforderlich.

Eine Reaktionsmitteleingabeanordnung gemäß dem Oberbegriff des Anspruchs 1 ist aus der DE 10 2014 108 877 A1 bekannt. Bei dieser bekannten Reaktionsmitteleingabeanordnung strömt das ein Reaktionsmitteleingabegehäuse umströmende Abgas an einer Außenseite einer in Richtung einer Gehäuselängsachse langgestreckten und damit einen Reaktionsmitteleingaberaum umgebenden Gehäusewandung zu einer Bodenwandung des Reaktionsmitteleingabegehäuses. In dieser Bodenwandung ist eine Mehrzahl von Öffnungen vorgesehen, durch welche hindurch das Abgas in den Reaktionsmitteleingaberaum strömt. In einem zentralen Bereich der Bodenwandung ist eine Öffnung vorgesehen, durch welche hindurch das von einer Reaktionsmitteleinspritzanordnung abgegebene Reaktionsmittel im Wesentlichen in Richtung der Gehäuselängsachse in den Reaktionsmitteleingaberaum eingespritzt wird.

Es ist die Aufgabe der vorliegenden Erfindung, eine Reaktionsmitteleingabeanordnung zur Eingabe von Reaktionsmittel in den Abgasstrom einer Brennkraftmaschine vorzusehen, mit welcher bei einfachem Aufbau unter Ausnutzung der Strömungsdynamik des mit Reaktionsmittel zu durchsetzenden Abgases eine effiziente Vermischung von Abgas und Reaktionsmittel erreicht wird.

Gemäß der vorliegenden Erfindung wird diese Aufgabe gelöst durch eine Reaktionsmitteleingabeanordnung zur Eingabe von Reaktionsmittel in den Abgasstrom einer Brennkraftmaschine gemäß Anspruch 1. Dabei kann im Abströmwandungsbereich der in Richtung der Gehäuselängsachse langgestreckten Gehäusewandung wenigstens eine Durchströmöffnung vorgesehen sein.

Die erfindungsgemäß aufgebaute Reaktionsmitteleingabeanordnung nutzt den Effekt, dass beim Umströmen des Reaktionsmitteleingabegehäuses bzw. der Gehäusewandung desselben aufgrund der über die Durchströmöffnung bzw. die Durchströmöffnungen bestehenden Verbindung ein Unterdruck an der Außenseite der Gehäusewandung dafür sorgt, dass in den Reaktionsmitteleingaberaum eingespritztes und von dem erwärmten Reaktionsmittelabgabeelement in Dampfform wieder abgegebenes bzw. von diesem reflektiertes Reaktionsmittel aus dem Reaktionsmitteleingabegehäuse nach Art eines Saugpumpeneffekts herausgesaugt wird und dabei effizient mit dem die Gehäusewandung umströmenden Abgas vermischt wird. Wenn dabei insbesondere auch am Abströmwandungsbereich wenigstens eine Durchströmöffnung vorgesehen ist, wird eine Rezirkulation von bereits zum Teil mit Reaktionsmittel durchsetztem Abgas in den Reaktionsmitteleingaberaum und damit eine noch bessere Durchmischung von Abgas mit Reaktionsmittel erreicht.

Eine eine gleichmäßige Verteilung von Reaktionsmittel im Inneren des Reaktionsmitteleingabegehäuses gewährleistenden Ausgestaltung wird dadurch erreicht, dass das Reaktionsmitteleingabegehäuse in Richtung einer Gehäuselängsachse langgestreckt ist, und dass die Reaktionsmitteleinspritzanordnung zum Einspritzen von Reaktionsmittel in den Reaktionsmitteleingaberaum im Wesentlichen in Richtung der Gehäuselängsachse angeordnet ist.

Um von der Reaktionsmitteleinspritzanordnung abgegebenes Reaktionsmittel zuverlässig in Richtung zum Reaktionsmittelabgabeelement leiten zu können, wird vorgeschlagen, dass der Reaktionsmitteleinspritzanordnung ein vorzugsweise rohrartiges Reaktionsmittelleitelement zugeordnet ist.

Mit einem derartigen Reaktionsmittelleitelement kann wenigstens eine, vorzugsweise jede Durchströmöffnung gegen direkten Reaktionsmittelaustritt von der Reaktionsmitteleinspritzanordnung aus dem Reaktionsmitteleingaberaum abschirmt werden. Dazu ist vorzugsweise vorgesehen, dass das Reaktionsmittelleitelement wenigstens eine, vorzugsweise jede Durchströmöffnung in der Reaktionsmitteleingaberichtung wenigstens teilweise, vorzugweise vollständig überlappt.

Insbesondere dann, wenn eine Reaktionsmitteleinleitrichtung im Wesentlichen der Richtung entspricht, in welcher eine Gehäuselängsachse der Gehäusewandung sich erstreckt, kann ein effizientes Leiten des Reaktionsmittels auf das Reaktionsmittelabgabeelement zu dadurch unterstützt werden, dass das Reaktionsmittelleitelement sich in Richtung der Gehäuselängsachse in den Reaktionsmitteleingaberaum erstreckt.

Bei einer baulich einfach zu realisierenden Ausgestaltung kann vorgesehen sein, dass das Reaktionsmittelabgabeelement eine durch elektrische Erregung erwärmbare Reaktionsmittelabgabeplatte umfasst.

Um die Reaktionsmittelabgabeplatte möglichst gleichmäßig mit dem in Richtung auf dieses zu strömenden Reaktionsmittel benetzen zu können, wird vorgeschlagen, dass die Reaktionsmittelabgabeplatte eine zur Reaktionsmitteleingaberichtung im Wesentlichen orthogonal orientierte Reaktionsmittelabgabeoberfläche aufweist.

Da die Reaktionsmittelabgabeplatte im Wesentlichen den Reaktionsmitteleingaberaum begrenzt, wird vorgeschlagen, dass wenigstens eine, vorzugsweise jede Durchströmöffnung in der Reaktionsmitteleingaberichtung zwischen der Reaktionsmitteleinspritzanordnung und der Reaktionsmittelabgabeplatte angeordnet ist.

Um im Anschluss des Reaktionsmittelabgabeelements an die Gehäusewandung einen im Wesentlichen gegen den Hindurchtritt von Reaktionsmittel bzw. Abgas abgeschlossenen Verbund zu erreichen, wird vorgeschlagen, dass an der Gehäusewandung eine das Reaktionsmittelabgabeelement in Richtung einer Gehäuselängsachse der Gehäusewandung vorzugsweise in Umfangsrichtung entlang der gesamten Gehäusewandung unterbrechungsfrei abstützende Abstützanordnung vorgesehen ist, oder/und dass das Reaktionsmittelabgabeelement bezüglich einer Innenseite der Gehäusewandung vermittels einer Isolieranordnung vorzugsweise in Umfangsrichtung entlang der gesamten Gehäusewandung unterbrechungsfrei isoliert gehalten ist. Ferner kann zum Vermeiden von Wärmeverlusten nach außen hin vorgesehen sein, dass das Reaktionsmittelabgabeelement an einer von der Reaktionsmitteleinspritzanordnung abgewandten Seite vorzugsweise im Wesentlichen vollständig von Isoliermaterial überdeckt ist.

Um bei möglichst geringer Beeinträchtigung der Abgasströmung den vorangehend angesprochenen durch Erzeugung eines Unterdrucks an der Außenseite der Gehäusewandung generierten Saugpumpeneffekt möglichst effizient nutzen zu können, kann vorgesehen sein, dass das Reaktionsmitteleingabegehäuse abgeflacht ist, derart, dass der Abstand zwischen dem Anströmwandungsbereich und dem Abströmwandungsbereich größer ist, als der Abstand zwischen den Seitenwandungsbereichen. Beispielsweise kann das Reaktionsmitteleingabegehäuse mit bezüglich einer Gehäuselängsachse elliptischem, ovalem oder tropfenförmigem Querschnittsprofil ausgebildet sein.

Die Erfindung betrifft ferner eine Abgasanlage für eine Brennkraftmaschine, umfassend ein von Abgas in einer Abgasströmungsrichtung durchströmbares Abgasrohr und in dem Abgasrohr eine von darin strömendem Abgas umströmbare, gemäß den Prinzipien der vorliegenden Erfindung aufgebaute Reaktionsmitteleingabeanordnung.

Die Reaktionsmitteleingabeanordnung kann in dem Abgasrohr mit zur Abgasströmungsrichtung im Wesentlichen orthogonal orientierter Gehäuselängsachse des Reaktionsmitteleingabegehäuses derart angeordnet sein, dass der Anströmwandungsbereich einen stromaufwärtigen Endbereich der Gehäusewandung bildet, der Abströmwandungsbereich einen stromabwärtigen Endbereich der Gehäusewandung bildet und die Seitenwandungsbereiche sich im Wesentlichen in der Abgasströmungsrichtung zwischen dem Anströmwandungsbereich und dem Abströmwandungsbereich erstrecken.

Um den erfindungsgemäßen Durchmischungseffekt bei Umströmung der Gehäusewandung an beiden Seiten vorsehen zu können, wird vorgeschlagen, dass in den Seitenwandungsbereichen im Wesentlichen orthogonal zur Abgasströmungsrichtung einander gegenüberliegend Durchströmöffnungen vorgesehen sind, oder/und dass in wenigstens einem Scheitelbereich der Seitenwandungsbereiche wenigstens eine Durchströmöffnung vorgesehen ist.

Die vorliegende Erfindung wird nachfolgend mit Bezug auf die beiliegenden Figuren detailliert beschrieben. Es zeigt:
- Fig.1: eine Teil-Längsschnittansicht einer mit einer Reaktionsmitteleingabeanordnung ausgebildeten Abgasanlage einer Brennkraftmaschine;
- Fig. 2: eine einer Schnittansicht längs einer Linie II-II in Fig. 1 entsprechende Darstellung einer Abgaseingabeanordnung in einem Abgasrohr.

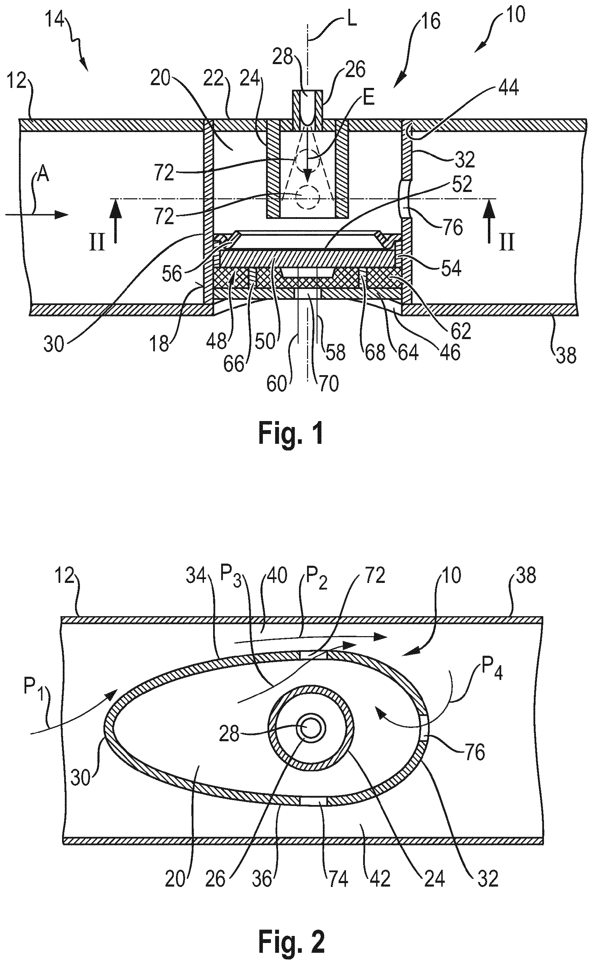

In den Fig. 1 und 2 ist eine Reaktionsmitteleingabeanordnung allgemein mit 10 bezeichnet. Die Reaktionsmitteleingabeanordnung dient dazu, flüssiges Reaktionsmittel, z. B. eine Harnstoff/Wasser-Lösung, in den von einer Brennkraftmaschine, beispielsweise in einem Kraftfahrzeug, ausgestoßenen Abgasstrom einzuleiten. Zu diesem Zwecke ist die Reaktionsmitteleingabeanordnung 10 in einem allgemein mit 12 bezeichneten Abgasrohr einer Abgasanlage 14 einer Brennkraftmaschine angeordnet.

Die Reaktionsmitteleingabeanordnung 10 umfasst ein Reaktionsmitteleingabegehäuse 16 mit einer in Richtung einer Gehäuselängsachse L beispielsweise im Wesentlichen zylindrisch langgestreckten Gehäusewandung 18. Ein Vergleich der Fig. 1 und 2 zeigt, dass die Gehäusewandung 18 verschiedene Querschnittsprofile aufweisen kann. Während in Fig. 1 eine Ausgestaltung mit bezüglich der Gehäuselängsachse L im Wesentlichen symmetrischen Querschnittsprofil, beispielsweise mit elliptischer Kontur, dargestellt ist, weist die in Fig. 2 dargestellte Gehäusewandung 18 ein quer zur Gehäuselängsachse langgestrecktes, ovales Profil auf. Auch andere Querschnittsprofile, wie z. B. Tropfenform, können gewählt werden.

Ein in dem Reaktionsmitteleingabegehäuse 16 gebildeter bzw. von der Gehäusewandung 18 umgebener Reaktionsmitteleingaberaum 20 ist in einer axialen Richtung, axial bezogen auf die Gehäuselängsachse L, durch ein plattenartiges oder deckelartiges Verschlusselement 22 verschlossen. An diesem Verschlusselement 22 sind ein beispielsweise rohrartiges Reaktionsmittelleitelement 24 und über einen Ansatz 26 eine Reaktionsmitteleinspritzanordnung 28, beispielsweise Injektor, getragen. Dabei können die Reaktionsmitteleinspritzanordnung 28 und das rohrartige Reaktionsmittelleitelement 24 zueinander im Wesentlichen konzentrisch angeordnet sein, was in Fig. 2 erkennbar ist. Die Reaktionsmitteleinspritzanordnung 28 ist so angeordnet, dass das von ihr abgegebene Reaktionsmittel eine Reaktionsmitteleingaberichtung E aufweist, die im Wesentlichen in Richtung der Gehäuselängsachse L gerichtet ist. Da das Reaktionsmittel im Allgemeinen in Sprayform eingespritzt wird, wird ein Sprühkegel entstehen, bei welchem gemäß den Prinzipien der vorliegenden Erfindung gleichwohl unterstellt wird, dass die so abgegebenen Reaktionsmitteltröpfchen eine Hauptströmungsrichtungskomponente in Reaktionsmitteleingaberichtung E aufweisen.

Die Gehäusewandung 18 des Reaktionsmitteleingabegehäuses 16 ist mit ihrem abgeflachten Querschnittsprofil so in dem Abgasrohr 12 angeordnet, dass ein Anströmwandungsbereich 30 bezogen auf eine Abgasströmungsrichtung A des im Abgasrohr 12 strömenden Abgases stromaufwärts positioniert ist, während ein Abströmwandungsbereich 32 stromabwärts positioniert ist. Somit bildet der Anströmwandungsbereich 30 den stromaufwärtigen Endbereich der Gehäusewandung 18, und der Abströmwandungsbereich 32 bildet den stromabwärtigen Endbereich der Gehäusewandung 18. Zwischen dem Anströmwandungsbereich 30 und dem Abströmwandungsbereich 32, welche jeweils diejenigen Wandungsbereiche mit geringerem Krümmungsradius umfassen, erstrecken sich einander gegenüberliegende Seitenwandungsbereiche 34, 36. Die Seitenwandungsbereiche 34, 36 erstrecken sich näherungsweise in der Abgasströmungsrichtung A, sind grundsätzlich in Anschluss an den Anströmwandungsbereich 30 und den Abströmwandungsbereich 32 ebenfalls gekrümmt ausgebildet. Wie durch einen Strömungspfeil P₁ angedeutet, wird das in der Abgasströmungsrichtung A auf die Gehäusewandung 18 zu strömende Abgas am Anströmwandungsbereich 30 abgelenkt, wobei selbstverständlich eine Ablenkung zu beiden Seiten hin erfolgt. Das Abgas strömt dann, wie durch einen Strömungspfeil P₂ angedeutet, jeweils entlang der beiden Seitenwandungen 34, 36 in einem zwischen den Seitenwandungen 34, 36 und einer Rohrwandung 38 des Abgasrohrs 12 jeweils gebildeten Strömungsraum 40, 42.

In Zuordnung zum Reaktionsmitteleingabegehäuse 16 sind in der Rohrwandung 38 des Abgasrohrs 12 an zwei einander gegenüberliegenden Seiten vorzugsweise an die Umfangskontur der Gehäusewandung 18 angepasste Öffnungen 44, 46 ausgebildet. Dabei ist die Öffnung 44 beispielsweise derart dimensioniert, dass die Gehäusewandung 18 durch diese Öffnung 44 hindurch mit enger Passung in das Abgasrohr 12 eingeschoben werden kann. Die Öffnung 46 ist so dimensioniert, dass diese im Wesentlichen dem Querschnittsprofil des von der Gehäusewandung 18 begrenzten Reaktionsmitteleingaberaums 20 entspricht, so dass bei vollkommen in das Abgasrohr 12 eingeschobenem Reaktionsmitteleingabegehäuse 16 die Gehäusewandung 18 an der Rohrwandung 38 in dem die Öffnung 46 umgebenden Bereich anliegt. Im Bereich beider Öffnungen 44, 46 kann die Gehäusewandung 18 mit der Rohrwandung 38 des Abgasrohrs 12 stoffschlüssig, beispielsweise durch Verschweißung, Verlötung oder Verklebung, gasdicht und hitzebeständig verbunden sein. In entsprechender Weise kann auch das Verschlusselement 22 mit der Gehäusewandung 18 verbunden sein, um auch in diesem Bereich den Reaktionsmitteleingaberaum 20 nach außen hin gasdicht und hitzebeständig abzuschließen.

Im Reaktionsmitteleingabegehäuse 16 ist, der Reaktionsmitteleinspritzanordnung 28 bzw. dem Reaktionsmittelleitelement 24 in der Reaktionsmitteleingaberichtung E gegenüberliegend, ein Reaktionsmittelabgabeelement 48 beispielsweise in Form einer Reaktionsmittelabgabeplatte 50 angeordnet. Die Reaktionsmittelabgabeplatte 50 weist eine durch das von der Reaktionsmitteleinspritzanordnung 28 abgegebene Reaktionsmittel benetzbare und zur Reaktionsmitteleingaberichtung im Wesentlichen orthogonal orientierte Reaktionsmittelabgabeoberfläche 52 auf. In ihrem Umfangsrandbereich ist die Reaktionsmittelabgabeplatte 50 durch eine diese vorzugsweise vollständig ringartig umgebende Isolieranordnung 54 einerseits bezüglich der Gehäusewandung 18 nach radial außen hin abgestützt und andererseits bezüglich dieser isoliert. An der Gehäusewandung 18 ist eine ringartig ausgebildete Abstützanordnung 56 getragen, an welcher die Reaktionsmittelabgabeplatte 50 sich in Richtung auf die Reaktionsmitteleinspritzanordnung 28 zu abstützen kann. Vorzugsweise erstreckt sich die Abstützanordnung 56 unterbrechungsfrei über den gesamten Umfang der Gehäusewandung 18, so dass ein entsprechender Abstützkontakt zwischen der Reaktionsmittelabgabeplatte 50 und der Abstützanordnung 56 über den gesamten Umfang im Wesentliche unterbrechungsfrei vorgesehen werden kann und somit im Außenrandbereich der Reaktionsmittelabgabeoberfläche 52 eine Leckage von diese benetzendem Reaktionsmittel in Richtung zur Isolieranordnung 54 hin im Wesentlichen unterbunden ist. Die Abstützanordnung 56 kann beispielsweise an mehreren diskreten Umfangsbereichen beispielsweise durch Verschweißung oder Verlötung an die Gehäusewandung 18 angebunden sein, um in diesem Bereich Wärmeverluste von der Reaktionsmittelabgabeplatte 50 zur Gehäusewandung 18 hin so weit als möglich zu vermeiden.

Das die Reaktionsmittelabgabeplatte 50 umfassende Reaktionsmittelabgabeelement 48 ist durch elektrische Erregung erwärmbar. Dazu kann beispielsweise in das Aufbaumaterial der Reaktionsmittelabgabeplatte 50 ein elektrisch erregbares Heizelement eingebettet sein. Alternativ oder zusätzlich kann ein derartiges elektrisch erregbares Heizelement an der von der Reaktionsmitteleinspritzanordnung 28 abgewandt positionierten Rückseite der Reaktionsmittelabgabeplatte 50, ggf. aber auch im Bereich der Reaktionsmittelabgabeoberfläche 52 vorgesehen sein. Über elektrische Leitungen 58, 60 kann das der Reaktionsmittelabgabeplatte 50 zugeordnete elektrisch erregbare Heizelement an eine Energiequelle angeschlossen werden, um somit im Betrieb die Reaktionsmittelabgabeplatte 50 zu erwärmen. Das in Tröpfchenform von der Reaktionsmitteleinspritzanordnung 28 in Richtung auf die Reaktionsmittelabgabeoberfläche 52 zu gesprühte Reaktionsmittel trifft somit auf die Reaktionsmittelabgabeoberfläche 52 auf. Ein Teil des auf diese Reaktionsmittelabgabeoberfläche 52 in Tröpfchenform auftreffenden Reaktionsmittels kann von der Reaktionsmittelabgabeoberfläche 52 reflektiert werden und wird somit im Reaktionsmitteleingaberaum 20 auch in Tröpfchenform vorhanden sein. Der größere Teil des auf die Reaktionsmittelabgabeoberfläche 52 auftreffenden Reaktionsmittels wird diese benetzen und aufgrund der Erwärmung der Reaktionsmittelabgabeplatte 50 in Dampfform von der Reaktionsmittelabgabeoberfläche 52 wieder in den Reaktionsmitteleingaberaum 20 abgegeben. Um dabei auch Wärmeverluste an der Rückseite der Reaktionsmittelabgabeplatte 50 zu vermeiden, kann diese vorzugsweise im Wesentlichen vollständig mit Isoliermaterial 62 überdeckt sein. An der Rückseite des Isoliermaterials 62 kann ein weiteres plattenartiges oder deckelartiges Verschlusselement 64 vorgesehen sein, welches über mehrere Abstützelemente 66, 68 die Reaktionsmittelabgabeplatte 50 gegen die Abstützanordnung 56 presst und an der Gehäusewandung 18 beispielsweise durch Materialschluss, wie z. B. Verschweißen, Verlöten oder Verkleben, gasdicht und hitzebeständig festgelegt ist. Durch eine Öffnung 70 im Abschlusselement 64 und die Öffnung 46 in der Rohrwandung 38 können die Leitungen 58, 60 aus dem Bereich der Reaktionsmitteleingabeanordnung 10 bzw. dem Abgasrohr 12 herausgeführt werden.

In der Gehäusewandung 18 des Reaktionsmitteleingabegehäuses 16 sind mehrere Durchströmöffnungen vorgesehen. Beispielsweise sind in den beiden Seitenwandungen 34, 36 vorzugsweise in einander bezüglich der Gehäuselängsachse L gegenüberliegenden Bereichen jeweils Durchströmöffnungen 72, 74 vorgesehen. Wie in Fig. 1 dargestellt, können in jeder der Seitenwandungen 34, 36 jeweils mehrere derartige Durchströmöffnungen 72 bzw. 74 vorgesehen sein, beispielsweise derart, dass diese in Richtung der Reaktionsmitteleinspritzrichtung E aufeinanderfolgen und in Richtung der Abgasströmungsrichtung A im Wesentlichen auf gleichem Niveau liegen. Im Abströmwandungsbereich 32 ist im dargestellten Ausgestaltungsbeispiel eine Durchströmöffnung 76 vorgesehen. Die Durchströmöffnungen 72, 74, 76 sind so positioniert, dass das rohrartige Reaktionsmittelleitelement 24, welches sich ausgehend von dem Bereich der Reaktionsmitteleinspritzanordnung 28 in den Reaktionsmitteleingaberaum 20 hinein erstreckt, alle Durchströmöffnungen 72, 74, 76 im Wesentlichen vollständig überlappt bzw. den direkten Hindurchtritt von aus der Reaktionsmitteleinspritzanordnung 28 abgegebenem Reaktionsmittel durch eine der Durchströmöffnungen 72, 74, 76 verhindert ist. Durch das Reaktionsmittelleitelement 24 ist somit gewährleistet, dass im Wesentlichen das gesamte aus der Reaktionsmitteleinspritzanordnung 28 abgegebene Reaktionsmittel auf die Reaktionsmittelabgabeplatte 50 auftritt und von dieser in der vorangehend beschriebenen Art und Weise wieder in Richtung zum Reaktionsmitteleingaberaum 20 abgegeben wird.

Im Betrieb einer Brennkraftmaschine und bei die Gehäusewandung 18 umströmendem Abgas wird aufgrund der Umlenkung des Abgases am Anströmwandungsbereich 30 und in den stromaufwärtigen Bereichen der Seitenwandungsbereiche 34, 36 das Abgas in die Strömungsräume 40, 42 geleitet. Dabei nimmt die für die Durchströmung zur Verfügung stehende Strömungsquerschnittsfläche bis zu Scheitelbereichen der Seitenwandungen 34, 36 ab, in welchen Scheitelbereichen vorzugsweise die Durchströmöffnungen 72, 74 der Seitenwandungen 34, 36 vorgesehen sind. Aufgrund der abnehmenden Strömungsquerschnittsfläche nimmt in diesem Bereich die Strömungsgeschwindigkeit des die Strömungszwischenräume 40, 42 durchströmenden Abgases zu. Eine zunehmende Strömungsgeschwindigkeit bedingt einen zunehmenden dynamischen Druck und entsprechend einen abnehmenden statischen Druck des Abgases. Dies bedeutet, dass im Bereich der Durchströmöffnungen 72, 74 in den Strömungszwischenräumen 40, 42 ein Unterdruck bezüglich des im Reaktionsmitteleingaberaum 20 vorhandenen Drucks auftritt. Dies führt dazu, dass im Reaktionsmitteleingaberaum 20 vorhandenes und Reaktionsmittel enthaltendes Gas, wie durch einen Strömungspfeil P₃ angedeutet, aus dem Reaktionsmitteleingaberaum 20 herausgesaugt wird und sich außerhalb des Reaktionsmitteleingabegehäuses 16 mit dem dieses umströmenden Abgas durchmischt. Da nur ein Teil des über die Durchströmöffnungen 72, 74 aus dem Reaktionsmitteleingaberaum 20 herausströmenden Materials Reaktionsmittel sein wird, würde aufgrund dieses Saugpumpeneffekts im Reaktionsmitteleingaberaum 20 ein Unterdruck entstehen. Da jedoch auch im Bereich der Durchströmöffnung 76 im Abströmwandungsbereich 32 der Reaktionsmitteleingaberaum 20 offen ist, kann hier eine Rezirkulation von mit Reaktionsmittel durchmischtem Abgas aus dem Abgasrohr 12 in den Reaktionsmitteleingaberaum 20 erfolgen, wie durch einen Strömungspfeil P₄ angedeutet. Dies bedeutet, dass das durch die Reaktionsmitteleinspritzanordnung 28 abgegebene Reaktionsmittel bzw. das durch die Reaktionsmittelabgabeplatte 50 abgegebene Reaktionsmittel mit einem in den Reaktionsmitteleingaberaum 20 eintretenden Gemisch aus Abgas und Reaktionsmittel im Reaktionsmitteleingaberaum 20 durchmischt wird und, wie durch den Strömungspfeil P₃ angedeutet, aus diesem abgesaugt und dem Abgasstrom beigemischt wird. Dies trägt zu einer effizienten, gleichmäßigen Durchmischung von Abgas und Reaktionsmittel bei, so dass stromabwärts der Reaktionsmitteleingabeanordnung 10 in einer dort im Abgasstrom positionierten Katalysatoranordnung die selektive katalytische Reduktion effektiv ablaufen kann.

Mit der vorangehend beschriebenen und in den Figuren dargestellten Reaktionsmitteleingabeanordnung 10 werden im Betrieb verschiedene Vorteile erreicht. Einerseits wird durch die thermische Isolation der Reaktionsmittelabgabeplatte 50 gewährleistet, dass Wärmeverluste in diesem Bereich weitestgehend vermieden werden können, so dass auch bereits bei vergleichsweise geringen Temperaturen eine effiziente Reaktionsmittelabdampfung erreicht werden kann und insofern auch bereits bei geringen Abgastemperaturen von unter 200 °C eine effiziente Reaktionsmittelbeimischung gewährleistet werden kann. Andererseits kann das Reaktionsmitteleingabegehäuse 16 über die Gehäusewandung 18 Wärme aus dem dieses umströmenden Abgas aufnehmen, so dass im kontinuierlichen Betrieb für eine zuverlässige Erwärmung gesorgt ist. Durch die Positionierung der Durchströmöffnungen 72, 74, 76 einerseits bzw. die Dimensionierung und Positionierung des rohrartigen Reaktionsmittelleitelements 24 andererseits wird gewährleistet, dass ein direkter Austrag von Reaktionsmittel aus dem Reaktionsmitteleingaberaum 20 im Wesentlichen nicht erfolgen kann. Das Reaktionsmittel wird, nachdem es zunächst auf die Reaktionsmittelabgabeplatte 50 aufgetroffen ist, zunächst im Reaktionsmitteleingaberaum 20 mit dort vorhandenem Gas, beispielsweise über die Durchströmöffnung 76 eingetretenem und bereits einen Reaktionsmittelanteil enthaltendem Abgas, durchmischt und erst dann über die Durchströmöffnungen 72, 74 in den Abgasstrom abgegeben.

Es ist darauf hinzuweisen, dass selbstverständlich die Prinzipien der vorliegenden Erfindung auch bei bezüglich der dargestellten und beschriebenen Ausgestaltungsform variierter Ausführung der Reaktionsmitteleingabeanordnung realisiert werden können. So kann, wie bereits vorangehend beschrieben, die Querschnittsprofilierung der Gehäusewandung anders gewählt sein, insbesondere unter Berücksichtigung strömungsdynamischer Aspekte. Auch die Anzahl und die Positionierung der Durchströmöffnungen kann anders gewählt werden. Während die Positionierung der Durchströmöffnungen in den Seitenwandungen dort, wo das die Gehäusewandung umströmende Abgas eine maximale Strömungsgeschwindigkeit hat, aufgrund des dann effizienten Saugpumpeneffekts besonders vorteilhaft ist, können alternativ oder zusätzlich auch weiter stromabwärts oder/und stromaufwärts in den Seitenwandungen oder in zumindest einer Seitenwandung Durchströmöffnungen vorgesehen sein. Auch im Bereich des Abströmwandungsbereichs können mehrere Durchströmöffnungen vorgesehen sein. Alternativ kann auf das Vorsehen einer Durchströmöffnung im Abströmwandungsbereich verzichtet werden. Obgleich die Ausgestaltung des Anströmwandungsbereichs ohne Durchströmöffnung besonders vorteilhaft für die Strömungsverhältnisse ist, kann auch im Anströmwandungsbereich oder einem weiter stromaufwärts liegenden Bereich der Seitenwandungsbereiche alternativ oder zusätzlich wenigstens eine Durchströmöffnung positioniert sein.

Durch die Auswahl der Positionierung der Abstützanordnung für die Reaktionsmittelabgabeplatte in Richtung der Gehäuselängsachse kann die Positionierung der Reaktionsmittelabgabeplatte im Inneren des Reaktionsmitteleingabegehäuses an den Aufbau eines jeweiligen Abgasführungssystems angepasst gewählt werden. Auch die Ausgestaltung der Reaktionsmittelabgabeplatte kann von der dargestellten Form abweichen. So könnte hier für die Platte auch eine gitterartige Struktur oder eine poröse Struktur gewählt werden, um die zur Aufnahme bzw. auch zur Abgabe von Reaktionsmittel zur Verfügung stehende Oberfläche zu vergrößern. Auch eine ondulierte oder mit Erhebungen versehene Struktur der Reaktionsmittelabgabeplatte ist möglich.

## Patentansprüche

1. Reaktionsmitteleingabeanordnung zur Eingabe von Reaktionsmittel in den Abgasstrom einer Brennkraftmaschine, umfassend:
- ein Reaktionsmitteleingabegehäuse (16) mit einem von einer in Richtung einer Gehäuselängsachse (L) langgestreckten Gehäusewandung (18) umgebenen Reaktionsmitteleingaberaum (20), wobei die Gehäusewandung (18) einen bezüglich einer Abgasströmungsrichtung (A) stromaufwärts zu positionierenden Anströmwandungsbereich (30), einen bezüglich der Abgasströmungsrichtung (A) stromabwärts zu positionierenden Abströmwandungsbereich (32) und zwischen dem Anströmwandungsbereich (30) und dem Abströmwandungsbereich (32) zwei Seitenwandungsbereiche (34, 36) umfasst
- eine zum Einspritzen von Reaktionsmittel in den Reaktionsmitteleingaberaum (20) im Wesentlichen in Richtung der Gehäuselängsachse (L) angeordnete Reaktionsmitteleinspritzanordnung (28) zum Einspritzen von Reaktionsmittel in den Reaktionsmitteleingaberaum (20) in einer Reaktionsmitteleingaberichtung (E) auf ein beheizbares Reaktionsmittelabgabeelement (48) zu,
**dadurch gekennzeichnet, dass** in wenigstens einem Seitenwandungsbereich (34, 36) der in Richtung der Gehäuselängsachse (L) langgestreckten Gehäusewandung (18) wenigstens eine Durchströmöffnung (72, 74) vorgesehen ist.

2. Reaktionsmitteleingabeanordnung nach Anspruch 1, **dadurch gekennzeichnet, dass** im Abströmwandungsbereich (32) der in Richtung der Gehäuselängsachse (L) langgestreckten Gehäusewandung (18) wenigstens eine Durchströmöffnung (76) vorgesehen ist.

3. Reaktionsmitteleingabeanordnung nach Anspruch 1 oder 2, **dadurch gekennzeichnet, dass** der Reaktionsmitteleinspritzanordnung (28) ein vorzugsweise rohrartiges Reaktionsmittelleitelement (24) zugeordnet ist.

4. Reaktionsmitteleingabeanordnung nach Anspruch 3, **dadurch gekennzeichnet, dass** das Reaktionsmittelleitelement (24) wenigstens eine, vorzugsweise jede Durchströmöffnung (72, 74, 76) gegen direkten Reaktionsmittelaustritt von der Reaktionsmitteleinspritzanordnung (28) aus dem Reaktionsmitteleingaberaum (20) abschirmt.

5. Reaktionsmitteleingabeanordnung nach Anspruch 4, **dadurch gekennzeichnet, dass** das Reaktionsmittelleitelement (24) wenigstens eine, vorzugsweise jede Durchströmöffnung (72, 74, 76) in der Reaktionsmitteleingaberichtung (E) wenigstens teilweise, vorzugweise vollständig überlappt.

6. Reaktionsmitteleingabeanordnung nach einem der Ansprüche 3 bis 5, **dadurch gekennzeichnet, dass** das Reaktionsmittelleitelement (24) sich in Richtung der Gehäuselängsachse (L) in den Reaktionsmitteleingaberaum (20) erstreckt.

7. Reaktionsmitteleingabeanordnung nach einem der vorangehenden Ansprüche, **dadurch gekennzeichnet, dass** das Reaktionsmittelabgabeelement (48) eine durch elektrische Erregung erwärmbare Reaktionsmittelabgabeplatte (50) umfasst.

8. Reaktionsmitteleingabeanordnung nach Anspruch 7, **dadurch gekennzeichnet, dass** die Reaktionsmittelabgabeplatte (50) eine zur Reaktionsmitteleingaberichtung (E) im Wesentlichen orthogonal orientierte Reaktionsmittelabgabeoberfläche (52) aufweist.

9. Reaktionsmitteleingabeanordnung nach Anspruch 7 oder 8, **dadurch gekennzeichnet, dass** wenigstens eine, vorzugsweise jede Durchströmöffnung (72, 74, 76) in der Reaktionsmitteleingaberichtung (E) zwischen der Reaktionsmitteleinspritzanordnung (28) und der Reaktionsmittelabgabeplatte (50) angeordnet ist.

10. Reaktionsmitteleingabeanordnung nach einem der vorangehenden Ansprüche, **dadurch gekennzeichnet, dass** an der Gehäusewandung (18) eine das Reaktionsmittelabgabeelement (48) in Richtung einer Gehäuselängsachse (L) der Gehäusewandung (18) vorzugsweise in Umfangsrichtung entlang der gesamten Gehäusewandung (18) unterbrechungsfrei abstützende Abstützanordnung (56) vorgesehen ist, oder/und dass das Reaktionsmittelabgabeelement (48) bezüglich einer Innenseite der Gehäusewandung (18) vermittels einer Isolieranordnung (54) vorzugsweise in Umfangsrichtung entlang der gesamten Gehäusewandung (18) unterbrechungsfrei isoliert gehalten ist, oder/und dass die Reaktionsmittelabgabeelement (48) an einer von der Reaktionsmitteleinspritzanordnung (28) abgewandten Seite vorzugsweise im Wesentlichen vollständig von Isoliermaterial (62) überdeckt ist.

11. Reaktionsmitteleingabeanordnung nach einem der vorangehenden Ansprüche, **dadurch gekennzeichnet, dass** das Reaktionsmitteleingabegehäuse (16) abgeflacht ist, derart, dass der Abstand zwischen dem Anströmwandungsbereich (30) und dem Abströmwandungsbereich (32) größer ist, als der Abstand zwischen den Seitenwandungsbereichen (34, 36).

12. Reaktionsmitteleingabeanordnung nach Anspruch 11, **dadurch gekennzeichnet, dass** das Reaktionsmitteleingabegehäuse (16) mit bezüglich einer Gehäuselängsachse (L) elliptischem, ovalem oder tropfenförmigem Querschnittsprofil ausgebildet ist.

13. Abgasanlage für eine Brennkraftmaschine, umfassend ein von Abgas in einer Abgasströmungsrichtung (A) durchströmbares Abgasrohr (12) und in dem Abgasrohr (12) eine von darin strömendem Abgas umströmbare Reaktionsmitteleingabeanordnung (10) nach einem der vorangehenden Ansprüche.

14. Abgasanlage nach Anspruch 13, **dadurch gekennzeichnet, dass** die Reaktionsmitteleingabeanordnung (10) in dem Abgasrohr (12) mit zur Abgasströmungsrichtung (A) im Wesentlichen orthogonal orientierter Gehäuselängsachse (L) des Reaktionsmitteleingabegehäuses (16) derart angeordnet ist, dass der Anströmwandungsbereich (30) einen stromaufwärtigen Endbereich der Gehäusewandung (18) bildet, der Abströmwandungsbereich (32) einen stromabwärtigen Endbereich der Gehäusewandung (18) bildet und die Seitenwandungsbereiche (34, 36) sich im Wesentlichen in der Abgasströmungsrichtung (A) zwischen dem Anströmwandungsbereich (30) und dem Abströmwandungsbereich (32) erstrecken.

15. Abgasanlage nach Anspruch 14, **dadurch gekennzeichnet, dass** in den Seitenwandungsbereichen (34, 36) im Wesentlichen orthogonal zur Abgasströmungsrichtung einander gegenüberliegend Durchströmöffnungen (72, 74) vorgesehen sind, oder/und dass in wenigstens einem Scheitelbereich der Seitenwandungsbereiche (34, 36) wenigstens eine Durchströmöffnung (72, 74) vorgesehen ist.

## Claims

1. Reactant introduction arrangement for introducing reactant into the exhaust gas stream of an internal combustion engine, comprising
- a reactant introduction housing (16) with a reactant introduction space (20) surrounded by a housing wall (18) elongated in the direction of a housing longitudinal axis (L), wherein the housing wall (18) comprises an incoming flow wall area (30) to be positioned upstream in relation to an exhaust gas flow direction (A), an outgoing flow wall area (32) to be positioned downstream in relation to the exhaust gas flow direction (A) and two side wall areas (34, 36) between the incoming flow wall area (30) and the outgoing flow wall area (32),
- a reactant injection device (28) arranged essentially in the direction of the housing longitudinal axis (L) for injecting reactant into the reactant introduction space (20) in a reactant introduction direction (E) towards a heatable reactant release element (48),
**characterized in that** at least one flow-through opening (72, 74) is provided in at least one side wall area (34, 36) of the housing wall (18) elongated in the direction of a housing longitudinal axis (L).

2. Reactant introduction arrangement in accordance with claim 1, **characterized in that** at least one flow-through opening (76) is provided in the outgoing flow wall area (32) of the housing wall (18) elongated in the direction of the housing longitudinal axis (L).

3. Reactant introduction arrangement in accordance with claim 1 or 2, **characterized in that** a preferably tubular reactant guide element (24) is associated with the reactant injection device (28).

4. Reactant introduction arrangement in accordance with claim 3, **characterized in that** the reactant guide element (24) shields at least one and preferably each flow-through opening (72, 74, 76) against direct discharge of reactant from the reactant injection device (28) from the reactant introduction space (20).

5. Reactant introduction arrangement in accordance with claim 4, **characterized in that** the reactant guide element (24) at least partially and preferably completely overlaps at least one and preferably each flow-through opening (72, 74, 76) in the reactant introduction direction (E).

6. Reactant introduction arrangement in accordance with one of the claims 3 through 5, **characterized in that** the reactant guide element (24) extends in the direction of the housing longitudinal axis (L) into the reactant introduction space (20).

7. Reactant introduction arrangement in accordance with one of the above claims, **characterized in that** the reactant release element (48) comprises a reactant release plate (50) heatable by energization with electrical energy.

8. Reactant introduction arrangement in accordance with claim 7, **characterized in that** the reactant release plate (50) has a reactant release surface (52) oriented essentially at right angles to the reactant introduction direction (E).

9. Reactant introduction arrangement in accordance with claim 7 or 8, **characterized in that** at least one and preferably each flow-through opening (72, 74, 76) is arranged between the reactant injection device (28) and the reactant release plate (50) in the reactant introduction direction (E).

10. Reactant introduction arrangement in accordance with one of the above claims, **characterized in that** a support device (56), which supports the reactant release element (48) in the direction of a housing longitudinal axis (L) of the housing wall (18) preferably without interruption in the circumferential direction along the entire housing wall (18), is provided at the housing wall (18), or/and that the reactant release element (48) is held in an insulated manner without interruption in relation to an inner side of the housing wall (18) by means of an insulating device (54) preferably in the circumferential direction along the entire housing wall (18), or/and that the reactant release element (48) is covered by insulating material (62) preferably essentially completely on a side facing away from the reactant injection device (28).

11. Reactant introduction arrangement in accordance with one of the above claims, **characterized in that** the reactant introduction housing (16) is flattened, such that the distance between the incoming flow wall area (30) and the outgoing flow wall area (32) is greater than the distance between the side wall areas (34, 36).

12. Reactant introduction arrangement in accordance with claim 11, **characterized in that** the reactant introduction housing (16) is configured with an elliptical, oval or drop-shaped cross-sectional profile in relation to a housing longitudinal axis (L).

13. Exhaust system for an internal combustion engine, comprising an exhaust pipe (12), through which exhaust gas can flow in the exhaust gas flow direction (A), and a reactant introduction arrangement (10), past which exhaust gas flowing in the exhaust pipe (12) can flow, in the exhaust pipe (12) in accordance with one of the above claims.

14. Exhaust system in accordance with claim 13, **characterized in that** the reactant introduction arrangement (10) is arranged in the exhaust pipe (12) such that the housing longitudinal axis (L) of the reactant introduction housing (16) is oriented essentially at right angles to the exhaust gas flow direction (A), such that the incoming flow wall area (30) forms an upstream end area of the housing wall (18), the outgoing flow wall area (32) forms a downstream end area of the housing wall (18), and the side wall areas (34, 36) extend essentially in the exhaust gas flow direction (A) between the incoming flow wall area (30) and the outgoing flow wall area (32).

15. Exhaust system in accordance with claim 14, **characterized in that** flow-through openings (72, 74) located opposite each other essentially at right angles to the exhaust gas flow direction are provided in the side wall areas (34, 36), or/and that at least one flow-through opening (72, 74) is provided in at least one vertex area of the side wall areas (34, 36).

## Revendications

1. Dispositif d'introduction de réactif pour introduire un réactif dans le flux de gaz d'échappement d'un moteur à combustion interne, comprenant
- un boîtier d'introduction de réactif (16) avec un espace d'introduction de réactif (20) entouré par une paroi de boîtier (18) allongée dans la direction d'un axe longitudinal de boîtier (L), dans lequel la paroi de boîtier (18) comprend une zone de paroi de flux entrant (30) à positionner en amont par rapport à une direction de flux de gaz d'échappement (A), une zone de paroi de flux sortant (32) à positionner en aval par rapport à une direction de flux de gaz d'échappement (A) et deux zones de parois latérales (34, 36) entre la zone de paroi de flux entrant (30) et la zone de paroi de flux sortant (32),
- un dispositif d'injection de réactif (28) disposé essentiellement dans la direction de l'axe longitudinal de boîtier (L) pour injecter du réactif dans l'espace d'introduction de réactif (20) dans une direction d'introduction de réactif (E) vers un élément de libération de réactif (48) chauffable,
**caractérisé en ce qu'**au moins une ouverture de passage (72, 74) est prévue dans au moins une zone de paroi latérale (34, 36) de la paroi de boîtier (18) allongée dans la direction de l'axe longitudinal de boîtier (L).

2. Dispositif d'introduction de réactif selon la revendication 1, **caractérisé en ce qu'**au moins une ouverture de flux (76) est prévue dans la zone de paroi de flux sortant (32) de la paroi de boîtier (18) allongée dans la direction de l'axe longitudinal de boîtier (L).

3. Dispositif d'introduction de réactif selon la revendication 1 ou 2, **caractérisé en ce qu'**un élément de guidage de réactif de préférence tubulaire (24) est associé au dispositif d'injection de réactif (28).

4. Dispositif d'introduction de réactif selon la revendication 3, **caractérisé en ce que** l'élément de guidage de réactif (24) protège au moins une et de préférence chaque ouverture de passage (72, 74, 76) contre la décharge directe de réactif du dispositif d'injection de réactif (28) hors de l'espace d'introduction de réactif (20).

5. Dispositif d'introduction de réactif selon la revendication 4, **caractérisé en ce que** l'élément de guidage de réactif (24) recouvre au moins partiellement et de préférence complètement au moins une et de préférence chaque ouverture de passage (72, 74, 76) dans la direction d'introduction de réactif (E).

6. Dispositif d'introduction de réactif selon l'une des revendications 3 à 5, **caractérisé en ce que** l'élément de guidage de réactif (24) s'étend dans la direction de l'axe longitudinal du boîtier (L) dans l'espace d'introduction de réactif (20).

7. Dispositif d'introduction de réactif selon l'une des revendications ci-dessus, **caractérisé en ce que** l'élément de libération de réactif (48) comprend une plaque de libération de réactif (50) pouvant être chauffée par excitation par énergie électrique.

8. Dispositif d'introduction de réactif selon la revendication 7, **caractérisé en ce que** la plaque de libération de réactif (50) présente une surface de libération de réactif (52) orientée essentiellement perpendiculairement à la direction d'introduction de réactif (E).

9. Dispositif d'introduction de réactif selon la revendication 7 ou 8, **caractérisé en ce qu'**au moins une et de préférence chaque ouverture de passage (72, 74, 76), est disposée entre le dispositif d'injection de réactif (28) et la plaque de libération de réactif (50) dans la direction d'introduction de réactif (E).

10. Dispositif d'introduction de réactif selon l'une des revendications ci-dessus, **caractérisé en ce qu'**un dispositif de support (56), qui supporte l'élément de libération de réactif (48) dans la direction d'un axe longitudinal de boîtier (L) de la paroi de boîtier (18), de préférence sans interruption dans la direction périphérique le long de toute la paroi de boîtier (18), est prévu sur la paroi de boîtier (18), ou/et **en ce que** l'élément de libération de réactif (48) est maintenu isolée sans discontinuation par rapport à un côté intérieur de la paroi de boîtier (18) au moyen d'un dispositif isolant (54), de préférence dans la direction périphérique le long de toute la paroi de boîtier (18), ou/et que l'élément de libération de réactif (48) est couvert par un matériau isolant (62) de préférence essentiellement complètement sur un côté opposé au dispositif d'injection de réactif (28).

11. Dispositif d'introduction de réactif selon l'une des revendications ci-dessus, **caractérisé en ce que** le boîtier d'introduction de réactif (16) est aplati, de sorte que la distance entre la zone de paroi de flux entrant (30) et la zone de paroi de flux sortant (32) est supérieure à la distance entre les zones des parois latérales (34, 36).

12. Dispositif d'introduction de réactif selon la revendication 11, **caractérisé en ce que** le boîtier d'introduction de réactif (16) est configuré par rapport à une axe longitudinal (L) du boîtier avec un profil en coupe transversale elliptique, ovale ou en forme de goutte.

13. Système d'échappement pour un moteur à combustion interne, comprenant un tuyau d'échappement (12), à travers lequel les gaz d'échappement peuvent s'écouler dans la direction de flux des gaz d'échappement (A), et un dispositif d'introduction de réactif (10), au-delà duquel les gaz d'échappement circulant dans le tuyau d'échappement (12) peuvent circuler, selon l'une des revendications précédentes.

14. Système d'échappement selon la revendication 13, **caractérisé en ce que** le dispositif d'introduction de réactif (10) est disposé dans le tuyau d'échappement (12) avec l'axe longitudinal (L) du boîtier d'introduction de réactif (16) orienté essentiellement à angle droit à la direction de flux de gaz d'échappement, de telle sorte que la zone de paroi de flux entrant (30) forme une zone d'extrémité amont de la paroi de boîtier (18), la zone de paroi de flux sortant (32) forme une zone d'extrémité aval de la paroi de boîtier (18), et les zones de paroi latérale (34, 36) s'étendent essentiellement dans la direction de flux des gaz d'échappement (A) entre la zone de paroi de flux entrant (30) et la zone de paroi de flux sortant (32).

15. Système d'échappement selon la revendication 14, **caractérisé en ce que** des ouvertures de passage (72, 74) situées essentiellement opposées perpendiculairement à la direction de flux des gaz d'échappement sont prévues dans les zones de paroi latérale (34, 36), ou/et qu'au moins une ouverture de passage (72, 74) est prévue dans au moins une zone sommet des zones de paroi latérale (34, 36).
